# EUROPEAN PATENT APPLICATION

(11) **EP 4 324 550 A1**
(43) Date of publication of application: **21.02.2024**
(21) Application number: 22787555.6
(22) Date of filing: 13.04.2022
(51) Int. Cl.: B01F 23/20, B01F 23/70, B01F 35/00

(54) **MICRO BUBBLE GENERATION METHOD AND GENERATION DEVICE**

(30) Priority: 15.04.2021 CN 202110406058
(71) Applicant: Ma, Minxiong, Beijing 100020 (CN)
(72) Inventor: Ma, Minxiong, Beijing 100020 (CN)
(74) Representative: Boult Wade Tennant LLP
(86) International application number: PCT/CN2022/086569
(87) International publication number: WO 2022/218333

(57) **Abstract**

A micro bubble generation method and generation device. The micro bubble generation method includes: passing a gas through a microporous material, the gas forming micro bubbles at an interface between the microporous material and liquid, the bubbles being adsorbed on the surface of the microporous material; impacting the micro bubbles adsorbed on the microporous material by relative motion of the microporous material and the liquid, such that the micro bubbles detach from the microporous material and enter into the liquid. The micro bubble generation device includes a gas accommodating chamber (1) disposed below the Liquid surface, and a gas transmission pipeline (3). A microporous material layer (2) is arranged around the periphery of the gas accommodating chamber (1). The gas in the gas accommodating chamber (1) passes through the microporous material layer (2) by gas pressure to form micro bubbles on the outer surface thereof. The microporous material layer (2) moves and/or the liquid outside the microporous material layer (2) moves to cut the micro bubbles.

## Description

### RELATED APPLICATION

The present application claims priority to Chinese Patent Application No. 202110406058.6, filed on April 15, 2021, and entitled "Micro Bubble Generation Method and Generation Device".

### TECHNICAL FIELD

The present disclosure relates to the technical field of gas-liquid two-phase interface interaction, and in particular to a micro bubble generation method and generation device.

### BACKGROUND

The micro-nano bubbles have been discovered as early as in the 1960s, and are applied to imaging technology. Since 2000, Japan has taken the lead in studying more characteristics and applications of micro-nano bubbles, and has discovered that micro-nano bubbles have the characteristics of extremely slow rising speed in water, self-pressurized dissolution, and extremely high mass transfer efficiency (more than 95%), and also have the characteristics of greatly improving the solubility of gas, large surface specific contact area, high interface potential, superior air flotation effect, reducing the flow resistance of liquid, and the explosion in the microscopic field of bubbles breaking the chemical bonds of surrounding water molecules to produce free radicals.

For aquaculture, the micro-nano bubbles can increase the density of fish culture more than two times, significantly shorten the culture period, and improve the feed conversion rate. The air-floating characteristic of the micro-nano bubbles can float flocs generated by fish manure and residual fish feed melted in water to water surface, thus greatly reducing the ammonia nitrogen and nitrite in the water and realizing zero antibiotic and zero-tailed-water aquaculture, which is not only able to increase production, but also of great significance to food safety and environmental governance of fish.

For crop cultivation, micro-nano bubbles can increase the yield of rice planting by more than 50%, make the root system of rice be more developed, and greatly improve its resistance to collapse. The principle is that the roots of plants need to absorb oxygen, and most of the microorganisms in the soil are aerobic, the more active the microorganisms are, the stronger the soil fertility is, and the more developed the roots are, so as to achieve the effect of increasing production. By using micro-nanometer bubble water to plant crops, not only can it increase the yield, but also can manage to improve the soil environment.

For improvement of body of water, high dissolved oxygen value is the key to water treatment. The root cause of black and odorous body of water is lack of oxygen, and if the oxygen is replenished, the ecological chain can recover itself and the water body can be treated.

In addition, the micro-nano bubbles can reduce the sliding resistance of liquid and achieve the effect of increasing the speed of the ship.

The micro-nano bubbles are not limited to air, oxygen, and may also be carbon dioxide, ozone, or other gases. The ozone water body with high concentration and large contact area is an advanced oxidation technology for the industry, and its application is of great significance, not only in industry, but also in the disinfection sterilization of food. In addition, the carbon dioxide water body with high concentration can help the industrialization of microalgae oil production. Micro-nano bubble technology is essentially a kind of high-efficiency gas-liquid mixing technology that breaks the convention that non-polar gases are insoluble in water, and it is a fundamental process that will permeate every field like electricity and bring about technological breakthroughs.

Micro-nano bubbles play such an important role, but they have not been popularized and applied in large scale in production practice, and only stay in the application of experimental research. The core problem is that the energy consumption of a micro-nano bubble generator is extremely high, and the production increase does not increase the yield. So far, the problem of energy consumption of various generators has not been broken through, and most of the micro-nano bubble generators use high-speed water flow generated by a water pump to cut the gas. The idea of the existing design is only limited to how to recycle the high-speed water flow, and in fact, it cannot achieve the purpose of greatly reducing energy consumption.

At present, there are many methods to generate micro bubbles, such as an ultrasonic method, a pressurizing-releasing dissolved gas method, a Venturi jet method and a rotary cutting method. However, the ultrasonic method produces a limited amount of bubbles, and the pressurized pressure relief gas dissolution method requires complex equipment structure and is difficult to implement. Therefore, the current commonly used micro-bubble generation method is Venturi jet method and rotary cutting method. The principle of the rotary cutting method is essentially the same as that of the pressurizing-releasing method, i.e., the liquid is pressurized to dissolve gas through high-speed rotation, and the pressure is released at the outlet to produce micro bubbles. Compared with the pressurizing-releasing method, the rotary cutting method reduces the difficulty of realization and saves the complicated pressurizing equipment. Compared with the Venturi jet method, the water flow in the rotary cutting method is swirling forward, the water-gas fusion process is longer, and the size of the bubbles formed at the outlet is more micro. However, in the Venturi jet method and the rotary cutting method, a large water pump or a dissolved gas pump (the lift is required to reach 20m to 40m, and the water pressure is 0.2MPa to 0.5MPa) is required to be used in the front end. The two methods cannot produce micro bubbles at low speed and low pressure. Due to the limitation of the water pump itself, the water-gas ratio cannot exceed 10: 1 (that is, 10 volumes of high-speed water flow are required to generate 1 volume of micro bubbles) at present. In addition, both a Venturi tube and a rotary cutter for generating micro bubbles speed up the water flow by reducing the diameter of the tube, and finally carry out high-speed jet flow from the outlet. Therefore, both the Venturi tube and the rotary cutter need huge energy consumption to produce micro bubbles, and the heat generated by the rotary friction of water in the extrusion process is also an important factor of high energy consumption. When the Venturi jet method and the rotary cutting method are adopted, large vehicles (such as forklift or crane) are required to transport the large water pump or dissolved gas pump, and the construction is difficult. All these problems restrict the popularization and application of micro bubbles in practical production to a great extent.

In order to solve the problems of high energy consumption, great difficulty and poor effect of generating micro bubbles in the process of generating the micro bubble in the related technology, an effective solution has not been provided at present.

### SUMMARY

An object of the present disclosure is to provide a micro bubble generation method and generation device, in which the gas is pressurized to pass through a microporous material and form micro bubbles at an interface between the microporous material and the liquid; and then the micro bubbles are cut through the relative movement between the microporous material and the liquid, before the bubbles themselves grow larger or combine with the adjacent micro bubbles to rapidly grow larger, such that the micro bubbles are peeled off the surface of the microporous material and enter into the liquid in the form of micro bubbles with a diameter less than 100 µm, thereby achieving the purpose of generating micro bubbles. This process does not require high-speed movement of the liquid, and there is no extrusion friction heat that is generated under high pressure in this process, so that the production energy consumption is greatly reduced, the cost is reduced, and the equipment has simple structure, is convenient to operate, has great economic benefits and is suitable for popularization and use.

The present disclosure can be implemented by the following technical features.

The present disclosure provides a micro bubble generation method, including:
passing a gas through a microporous material, the gas forming micro bubbles at an interface between the microporous material and liquid; and
impacting the micro bubbles adsorbed on the microporous material by relative motion of the microporous material and the liquid, such that the micro bubbles detach from the microporous material and enter into the liquid.

The present disclosure provides a micro bubble generation device, which includes a gas accommodating chamber disposed below a Liquid surface and a gas transmission pipeline for delivering gas into the gas accommodating chamber. A microporous material layer that allows the gas in the gas accommodating chamber to pass through is provided around a periphery of the gas accommodating chamber. One end of the gas transmission pipeline is located above the Liquid surface and is connected to a gas source, and the other end of the gas transmission pipeline extends into the gas accommodating chamber, so that the gas in the gas accommodating chamber passes through the microporous material layer by gas pressure and forms micro bubbles on an outer surface of the microporous material layer. The microporous material layer and/or the liquid outside the microporous material layer cut the micro bubbles by movement, such that the micro bubbles enter into the liquid.

The technical effects of the present disclosure are as follows.

Firstly, in the micro bubble generation device, gas is introduced into a gas accommodating chamber, so that a certain gas pressure is formed in the gas accommodating chamber. Under the action of the gas pressure, the gas in the gas accommodating chamber passes through the microporous material layer and forms micro bubbles on an interface between an outer surface of the microporous material layer and the liquid. By driving a relative movement between the microporous material layer and the liquid, the micro bubbles adsorbed on the microporous material layer are impacted by the liquid, such that the micro bubbles are detached from the microporous material layer and enter into the liquid, thereby achieving the purpose of generating micro bubbles. In the working process of the present disclosure, the main energy consumption is not the energy consumption for moving the gas, but the energy consumption for overcoming the friction resistance of the gas accommodating chamber when the gas accommodating chamber rotates in the liquid. However, in the present disclosure, the velocity at which the gas accommodating chamber rotates or the liquid flows rotationally along the gas accommodating chamber only needs to be greater than the velocity at which the gas passes through the microporous material layer. As the velocity of the gas flow is usually in the order of centimeters per second, and a microporous material with a small surface friction coefficient is preferably used as the microporous material layer, the flow rate of the liquid driven by the microporous material layer can be completely controlled below one meter per second. Therefore, the rotation speed required during the operation is low. In the present disclosure, the conditions required for generating micro bubbles do not include water-gas ratio, and the bubble generation process does not need high-speed water flow, thus avoiding the problem of friction heat generation and energy consumption. Therefore, the present disclosure can effectively reduce production energy consumption, reduce production costs, and quickly produce a large number of micro bubbles with uniform particle size, and can obtain great economic benefits.

Secondly, the weight and the volume of the micro bubble generation device are greatly reduced as compared with the conventional micro bubble generation device. The power equipment used in the present disclosure is an electric motor, the body weight of the motor with a power of 1 KW is less than 0.5 kg, while the power of most motors of the device of the present disclosure are below 1KW, and the microporous material is also a light material, and the weight of the device of the present disclosure is mainly in the supporting equipment such as the fixed base. Therefore, the weight of the whole device of the present disclosure can be controlled within 10 kg, the volume of the whole device can be 30 cm in diameter and 120 cm in height, and the device can be installed manually during actual use.

Thirdly, the volume of the micro bubble generation device can be adjusted according to actual needs to control the amount of the generated micro bubbles. The whole device can be miniaturized, the pow equipment adopts a low-power micro motor, and other parts can be correspondingly reduced, thereby greatly expanding the application fields of the micro bubbles, for example, it can be applied to the domestic and civil fields for people to make ready-to-drink high-oxygen water and high-hydrogen water to ensure their health. In addition, the device can also be used for preparing ozone water, preserving vegetables, fruits and meat, removing pesticide residues and the like.

Fourthly, the micro bubble generation device is simple in structure, easy to control the raw materials which are all industrial products, and suitable for large-scale production. In addition, the device of the present disclosure has low energy consumption and low power, and the device requires about 30 watts of power to produce micro bubbles, which can be powered by solar panels. Production of the micro bubbles by the present disclosure can be performed in fields, rivers and lakes. The micro bubbles have been proved to have significant effects on crop yield and river sewage treatment. The sun, air and water are put to full use, which cannot be achieved with the conventional rotary cutting method.

Fifthly, the particle size distribution uniformity of the micro bubbles generated by the micro bubble generation device is high. The particle size distribution of the micro bubbles generated by the conventional micro bubble generation device ranges from the nanometer level to the micrometer level (1 nanometer to 200 micrometers). However, the consistency of the particle size of the micro bubbles in the present disclosure depends on the consistency of the pore size distribution of the microporous material. As the current microporous material has good quality, the particle size range of the micro bubbles generated thereby has good consistency.

Sixthly, the micro bubble generation device drives gas to rotate to form high-speed gas flow to cut the liquid through the operation of the microporous material. The conversion of this idea can reduce the energy consumption by more than 100 times, and through the improvement of the device, there is still more space for improvement. When energy consumption is no longer the bottleneck of micro-nano bubbles, the changes brought by the micro-nano bubbles in various industries will have extraordinary significance.

### BRIEF DESCRIPTION OF DRAWINGS

The following drawings are intended only to schematically illustrate and explain the present disclosure and do not limit the scope of the present disclosure. In the drawings,
FIG. 1 is a flow chart of a micro bubble generation method according to the present disclosure.
FIG. 2 is a first structural schematic diagram of a micro bubble generation device according to the present disclosure.
FIG. 3 is a structural schematic diagram of the portion below the Liquid surface in FIG. 2.
FIG. 4 is a second structural schematic diagram of a micro bubble generation device according to the present disclosure.
FIG. 5 is a structural schematic diagram of the portion below the Liquid surface in FIG. 4.
FIG. 6 is a third structural schematic diagram of a micro bubble generation device according to the present disclosure.
FIG. 7 is a structural schematic diagram of the portion below the Liquid surface in FIG. 6.
FIG. 8 is a fourth structural schematic diagram of a micro bubble generation device according to the present disclosure.
FIG. 9 is a fifth structural schematic diagram of a micro bubble generation device according to the present disclosure.
FIG. 10 is a sixth structural schematic diagram of a micro bubble generation device according to the present disclosure.
FIG. 11 is a plan view of the micro bubble generation device of FIG. 10.

### DESCRIPTION OF EMBODIMENTS

For a clearer understanding of the technical features, objects and effects of the present disclosure, specific embodiments of the present disclosure will now be described with reference to the accompanying drawings.

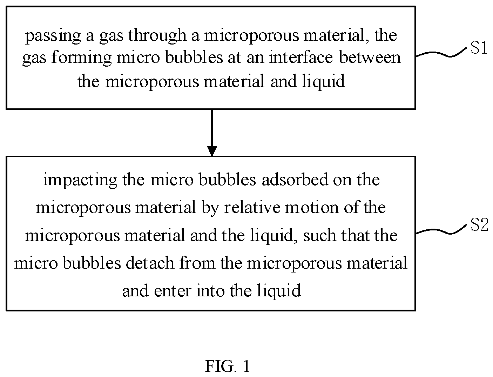

As shown in FIG. 1, the present disclosure provides a micro bubble generation method, including:
step S 1: passing a gas through a microporous material, the gas forming micro bubbles at an interface between the microporous material and liquid.

Specifically, the step S1 includes:
step S101: a microporous material layer 2 is provided around the periphery of the gas accommodating chamber 1 in a circumferential direction of the gas accommodating chamber 1, and the gas accommodating chamber 1 is placed below the Liquid surface;
step S102: one end of a gas transmission pipeline 3 is located above the Liquid surface and is connected to a gas source, the other end of the gas transmission pipeline 3 is in communication with the gas accommodating chamber 1, and gas is filled into the gas accommodating chamber 1 through the gas transmission pipeline 3 to form a certain gas pressure in the gas accommodating chamber 1; and
step S103: the gas in the gas accommodating chamber 1 passes through the microporous material layer 2 by the gas pressure in the gas accommodating chamber 1, and forms micro bubbles on an outer surface of the microporous material layer 2.

step S2: impacting the micro bubbles adsorbed on the microporous material by the relative motion of the microporous material and the liquid, so that the micro bubbles can be separated from the microporous material and enter into the liquid before the micro bubbles grow to have a diameter of 100 µm.

Specifically, the microporous material layer 2 is driven to rotate in its own circumferential direction and/or the liquid located outside the microporous material layer 2 is driven to flow in the circumferential direction of the microporous material layer 2, thereby cutting the micro bubbles by the relative motion between the microporous material layer 2 and the liquid, such that the micro bubbles get rid of the adsorption force of the microporous material layer 2 and/or the surface tension between the bubbles and the microporous material layer 2 to enter into the liquid, thereby generating a large number of micro bubbles.

Further, in the step S2, the shear force of the liquid on the micro bubbles is greater than the adsorption force of the capillary effect of the microporous material on the micro bubbles and/or the surface tension between the bubbles and the microporous material layer 2, so as to impact the bubbles to make them detach from the microporous material and enter into the liquid in the form of micro bubbles.

Further, the time period between the moment when the micro bubbles are formed and the moment when the micro bubbles are detached from the microporous material by cutting is less than the time period required for the micro bubbles to grow larger and to combine with the adjacent micro bubbles and grow rapidly to form large bubbles (bounded by a diameter of 100 µm). In the absence of external forces (i.e., shear forces of the liquid on the micro bubbles), the bubbles generated on the surface of the microporous material with the smallest pore diameter will gradually grow larger and combine with neighboring bubbles to form larger bubbles by the capillary adsorption force of the microporous material and/or the surface tension between the bubbles and the microporous material layer 2. The bubbles do not leave the surface of the microporous material and enter into the liquid in the form of large bubbles (more than 200 µm in diameter) until the buoyancy of the bubbles overcomes the capillary adsorption force and/or the surface tension between the bubbles and the microporous material layer 2. Therefore, it is necessary to cut the micro bubbles quickly after they are formed at the interface between the microporous material and the liquid, ensuring that the bubbles enter the liquid before their diameter increases to 100 µm.

In another alternative embodiment of the present disclosure, in the step S2, the liquid is in a static state, and the microporous material is in a moving state and drives the gas entering the microporous material to move synchronously with it, so as to impact (or cut) the micro bubbles formed on the interface between the microporous material and the liquid by the movement of the microporous material. Although micro-nano bubbles can also be cut by the movement of the liquid as described above, an exemplary embodiment of the present disclosure employs movement of the microporous material while the liquid is in a static state, which dramatically reduces energy consumption compared to movement of the liquid outside the microporous material. No additional energy is consumed once the microporous material has gained a required movement speed, and the gas that is constantly entering the microporous material consumes very little energy to be driven up. If the micro bubbles generated on the stationary microporous material are cut by the movement of the liquid, the energy consumption required for the liquid to speed up to the same speed (i.e., the same rotational speed as the microporous material) is much greater than the energy consumption required for the microporous material to drive the gas to the same speed (the difference between the two amounts to nearly six orders of magnitude).

In an alternative embodiment of the present disclosure, in the step S2, the microporous material is in a static state, and the liquid is in a moving state, so as to impact (or cut) the micro bubbles formed on the interface between the microporous material and the liquid by the movement of the liquid.

Further, of course, the microporous material is not limited to a material with micropores, and it may also be a cathode or an anode that generates micro bubbles on the surface of the material during electrolysis.

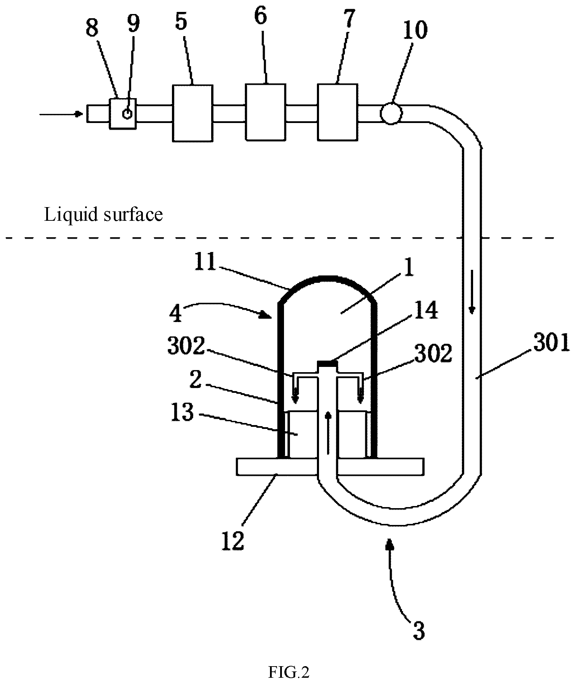

As shown in FIGs. 2 to 7, the present disclosure provides a micro bubble generation device, including a gas accommodating chamber 1 and a gas transmission pipeline 3. The gas transmission pipeline 3 is used for delivering gas into the gas accommodating chamber 1 to form a certain gas pressure in the gas accommodating chamber 1. A microporous material layer 2 through which the gas in the gas accommodating chamber 1 can pass is provided around the periphery of the gas accommodating chamber 1 in the circumferential direction of the gas accommodating chamber 1. The gas accommodating chamber 1 is placed below the Liquid surface. One end of the gas transmission pipeline 3 is located above the Liquid surface and is connected to a gas source, and the other end of the gas transmission pipeline 3 extends into the gas accommodating chamber 1, so that the gas in the gas accommodating chamber 1 passes through the pores of the microporous material layer 2 by gas pressure and forms micro bubbles on an outer surface of the microporous material layer 2. The microporous material layer 2 is driven to rotate in the circumferential direction and/or the liquid located outside the microporous material layer 2 is driven to flow in the circumferential direction of the microporous material layer 2, so that the micro bubbles on the outer surface of the microporous material layer 2 are cut by the relative movement of the liquid and the microporous material layer 2, and then enter into the liquid. Of course, the microporous material layer 2 is not limited to rotating in the circumferential direction, and the liquid is not limited to flowing in the circumferential direction of the microporous material layer 2, and various forms of movement (e.g., left-right swinging, etc.) may be adopted, as long as the movement enables the liquid to rapidly cut the micro bubbles on the outer surface of the microporous material layer 2.

Although micro-nano bubbles can be generated by the movement of the liquid outside the microporous material, the movement of the microporous material with the liquid being in a static state consumes less energy. No additional energy is consumed once the microporous material has gained a required movement speed, and the gas that is constantly entering the microporous material consumes very little energy to be driven up. If the micro bubbles generated on the stationary microporous material are cut by the movement of the liquid, the energy consumption required for the liquid to speed up to the same speed is much greater than the energy consumption required for the microporous material to drive the gas to the same speed.

Further, as shown in FIGs. 2, 4 and 6, the gas transmission pipeline 3 is provided with a gas pump 5, a primary filter 6 and a secondary filter 7 in sequence in the gas flow direction. The gas pump 5, the primary filter 6 and the secondary filter 7 are all located above the Liquid surface. The pore diameter of the filter element of the secondary filter 7 is smaller than the pore diameter of the filter element of the primary filter 6 and the pore diameter of the microporous material layer 2. The dust in the gas is removed by the primary filter 6 and the secondary filter 7. The primary filter 6 is used to filter out the dust with a large particle size in the gas, and the secondary filter 7 is used to filter out the dust with a small particle size in the gas, so as to ensure that the microporous material layer 2 will not be clogged by dust in a long-term working state, thereby prolonging the service life of the device. In addition, the filter elements of the primary filter 6 and the secondary filter 7 are consumables that can be easily replaced periodically. The gas in the gas accommodating chamber 1 can pass through the microporous material layer 2 by the centrifugal force generated by the rotation of the gas accommodating chamber 1, and forms a negative pressure in the gas accommodating chamber 1, so that the gas from the gas source enters the gas accommodating chamber 1 for replenishment. However, the smaller the pores in the microporous material layer 2 are, the greater the gas resistance thereof is, and in the case where the centrifugal force generated by the gas rotation is insufficient to pass through the microporous material lay 2, a gas pump 5 may be used to pump the gas into the gas accommodating chamber 1, so as to increase the gas pressure in the gas accommodating chamber 1, thereby increasing the penetration force of the gas in the gas accommodating chamber 1 and ensuring that the gas passes through the microporous material layer 2 smoothly. Alternatively, the centrifugal force may also be increased by increasing the rotational speed of the gas accommodating chamber 1 to make it easier for the gas to pass through the microporous material layer 2, but this method requires more energy consumption than the gas pump 5.

Further, as shown in FIGs. 2, 4 and 6, a flow meter 8 is provided on a section of the gas transmission pipeline 3 upstream the gas pump 5, a pressure gauge 10 is provided on a section of the gas transmission pipeline 3 downstream the secondary filter 7, and the flow meter 8 is provided with an adjusting knob 9 capable of controlling the flow rate of the gas. The flow rate of the gas can be monitored in real time by the flow meter 8, and the adjusting knob 9 on the flow meter 8 can be adjusted according to actual situation, so as to control the flow rate of the gas per unit time, thereby adjusting the particle size of the micro bubbles. The flow meter 8 may be, but is not limited to, a glass rotameter.

Further, the thickness of the microporous material layer 2 is gradually increased from bottom to top to balance the unevenness of gas output caused by the pressure difference between upper and lower water in the gas accommodating chamber 1, so as to ensure the consistency of the particle sizes of the bubbles. The thickness of each position of the microporous material layer 2 can be adjusted according to the gas resistance property of the microporous material actually used. In actual use, under the premise that the thickness of the microporous material layer 2 ensures that it has sufficient strength to support the gas accommodating chamber 1 for movement, the smaller the thickness of the microporous material layer 2 is, the smaller the gas resistance is, and the better the gas permeability of the microporous material layer 2 is. The size specification of the gas accommodating chamber 1 is not limited in the present disclosure. The larger the volume of the gas accommodating chamber 1 is, the larger the surface area of the microporous material layer 2 is, and the larger the ventilation amount is, but correspondingly the larger the frictional resistance received in the rotation process is.

Further, the pore diameter of the microporous material layer 2 is less than 5 µm.

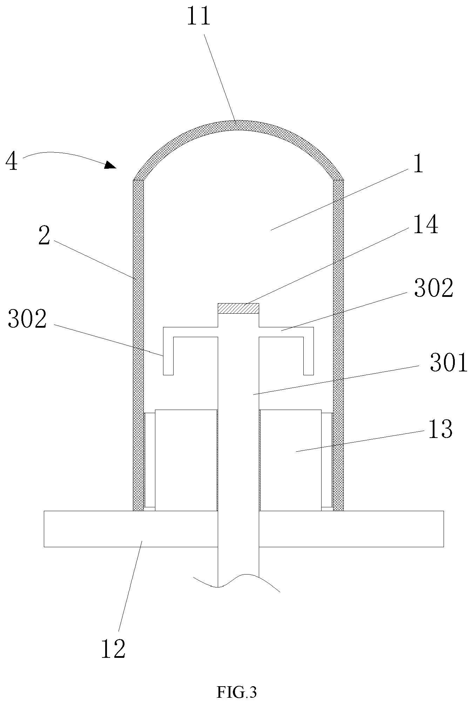

In an alternative embodiment of the present disclosure, as shown in FIGs. 2 and 3, the micro bubble generation device further includes an outer rotor motor 13 for driving the gas accommodating chamber 1 to rotate in the circumferential direction. The outer rotor motor 13 is disposed in the gas accommodating chamber 1. The rotor of the outer rotor motor 13 and the inner wall of a lower portion of the microporous material layer 2 are sealed and fixedly connected by a sealant. The microporous material layer 2 can be rotated by the rotor of the outer rotor motor 13. In the embodiment, the outer rotor motor 13 and the microporous material layer 2 are combined to form a shearing head 4 capable of rotating in the liquid. In the embodiment, it is understood that the movement of the microporous material drives the movement of the gas entering into the microporous material to rotate and cut the liquid to generate micro bubbles, which consumes significantly less energy compared to the existing rotary cutting method that drives the liquid to rotate at a high speed. Theoretically, the energy consumption for driving the gas and for driving the liquid to reach the same movement speed differs by more than two orders of magnitude. The outer rotor motor 13 is an outer rotor brushless motor for underwater work.

Further, as shown in FIGs. 2 and 3, the micro bubble generation device further includes a first fixed base 12. The microporous material layer 2 is a cylindrical structure which is vertically arranged and has a closed top and an open bottom. A sealing cap 11 made of a microporous material and integrally formed with the microporous material layer 2 is provided on the top of the microporous material layer 2, and the sealing cap 11 is a hollow hemispherical structure protruding upward. The bottom of the outer rotor motor 13 is sealingly and fixedly connected to the top of the first fixed base 12. The first fixed base 12 supports the microporous material layer 2 to ensure that the device is in a stable working state.

Specifically, as shown in FIGs. 2 and 3, the gas transmission pipeline 3 includes a first main gas transmission pipe 301. One end of the first main gas transmission pipe 301 is located above the Liquid surface. The other end of the first main gas transmission pipe 301 extends into the gas accommodating chamber 1 through the first fixed base 12 and the outer rotor motor 13 in sequence, and is internally sealed with a first plugging block 14. The first main gas transmission pipe 301 passes through a central hole of the outer rotor motor 13 and is sealingly connected with the outer rotor motor 13 by a sealant. Four first branch gas transmission pipes 302 are connected to the first main gas transmission pipe 301 located in the gas accommodating chamber 1. The first branch gas transmission pipes 302 are uniformly distributed in the circumferential direction of the first main gas transmission pipe 301. The first branch gas transmission pipe 302 includes a horizontal pipe section and a vertical pipe section. One end of the horizontal pipe section is connected to the first main gas transmission pipe 301. The other end of the horizontal pipe section extends in the horizontal direction to a position close to the microporous material layer 2 and is connected to the top end of the vertical pipe section. The bottom end of the vertical pipe section extends vertically downward. The first main gas transmission pipe 301 and the first branch gas transmission pipes 302 deliver the gas from the gas source into the gas accommodating chamber 1, and distribute the gas substantially uniformly on the inner wall of the microporous material layer 2.

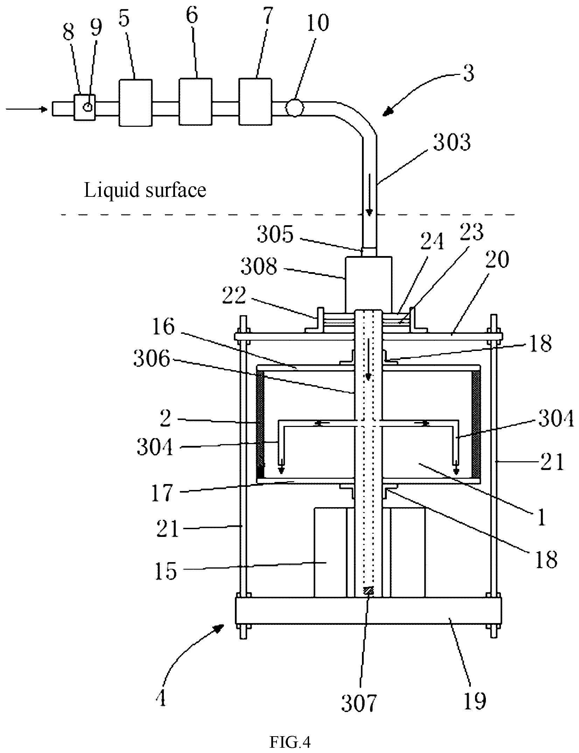

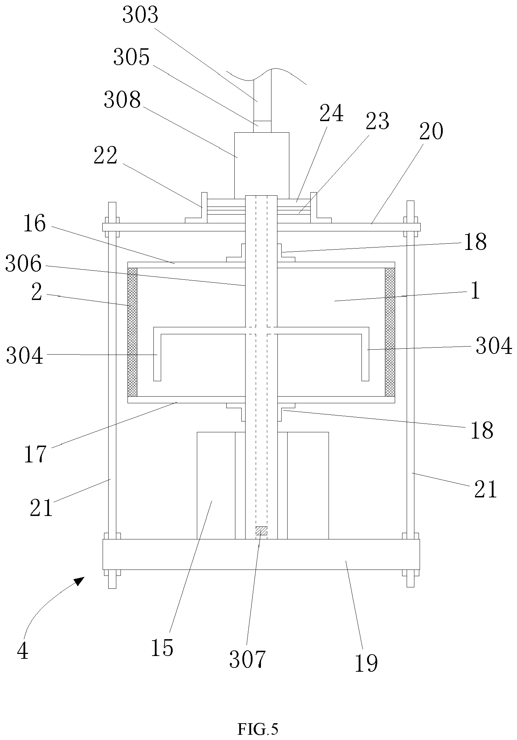

In another alternative embodiment of the present disclosure, as shown in FIGs. 4 and 5, the micro bubble generation device further includes an inner rotor motor 15 for driving the gas accommodating chamber 1 to rotate in the circumferential direction. The gas transmission pipeline 3 includes a second main gas transmission pipe 303 and a first hollow shaft 306. The first hollow shaft 306 is an output shaft of the inner rotor motor 15, and is internally sealed with a second plugging block 307. The first hollow shaft 306 passes through the gas accommodating chamber 1 and is connected to one end of the second main gas transmission pipe 303, and the other end of the second main gas transmission pipe 303 is located above the Liquid surface. Four second branch gas transmission pipes 304 are connected to the second main gas transmission pipe 303 located in the gas accommodating chamber 1, and the second branch gas transmission pipes 304 are uniformly distributed in the circumferential direction of the second main gas transmission pipe 303. The second branch gas transmission pipe 304 includes a horizontal pipe section and a vertical pipe section. One end of the horizontal pipe section is connected to the second main gas transmission pipe 303. The other end of the horizontal pipe section extends in the horizontal direction to a position close to the microporous material layer 2, and is connected to the top end of the vertical pipe section. The bottom end of the vertical pipe section extends vertically downward. The second main gas transmission pipe 303 and the second branch gas transmission pipes 304 deliver the gas from the gas source into the gas accommodating chamber 1, and distribute the gas substantially uniformly on the inner wall of the microporous material layer 2. The first hollow shaft 306 is an output shaft of the inner rotor motor 15 and is also used for delivering the gas. The inner rotor motor 15 is an inner rotor brushless motor for underwater work.

Further, as shown in FIGs. 4 and 5, the micro bubble generation device further includes a first upper cap 16 and a first lower cap 17. The microporous material layer 2 is a cylindrical structure which is vertically arranged and has two open ends. The first upper cap 16 is sealingly disposed at the top opening of the microporous material layer 2, and the first lower cap 17 is sealingly disposed at the bottom opening of the microporous material layer 2. The first hollow shaft 306 passes through the first lower cap 17, the gas accommodating chamber 1 and the first upper cap 16 in sequence from bottom to top. The first hollow shaft 306 is sealingly and fixedly connected to the first lower cap 17 and the first upper cap 16 through the flange couplings 18, respectively. The first upper cap 16 and the microporous material layer 2, and the first lower cap 17 and the microporous material layer 2 may be sealed and fixed by a connection manner such as a sealant. In the embodiment, the inner rotor motor 15, the microporous material layer 2, the first upper cap 16 and the first lower cap 17 are combined to form a shearing head 4 capable of rotating in the liquid.

Further, as shown in FIGs. 4 and 5, a straight pipe 308 is connected between the first hollow shaft 306 and the second main gas transmission pipe 303, and the straight pipe 308 and the second main gas transmission pipe 303 are connected by a gas pipe quick-connect joint 305, so that the first hollow shaft is in non-contact communication with the second main gas transmission pipe.

Further, as shown in FIGs. 4 and 5, the micro bubble generation device further includes a bearing seat fixing plate 20 and a second fixed base 19. The bearing seat fixing plate 20 is located above the second fixed base 19, and is connected to the second fixed base 19 through a plurality of connecting posts 21. Both the gas accommodating chamber 1 and the inner rotor motor 15 are disposed between the bearing seat fixing plate 20 and the second fixed base 19. The inner rotor motor 15 is located below the gas accommodating chamber 1, and the inner rotor motor 15 is fixed to the second fixed base 19. The first hollow shaft 306 passes through the bearing seat fixing plate 20 and protrudes to the outside of it. A bearing 24 and a first sealing ring 23 sleeve on the first hollow shaft 306 located above the bearing seat fixing plate 20 from top to bottom. Both the bearing 24 and the first sealing ring 23 are disposed inside a bearing seat 22. The bottom of the straight pipe 308 is bonded to the top of the bearing 24 by a sealant. Through the above structure, the stability of the whole device can be improved, thereby preventing the inner rotor motor 15 from shaking under the action of an external force during operation.

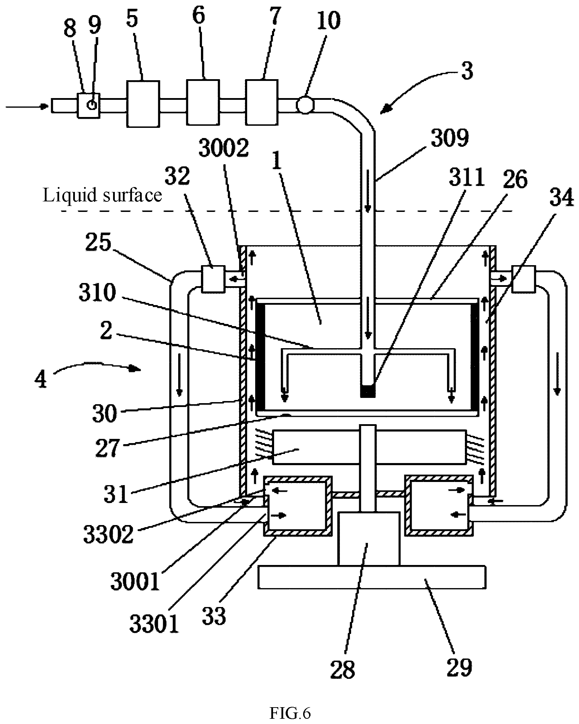

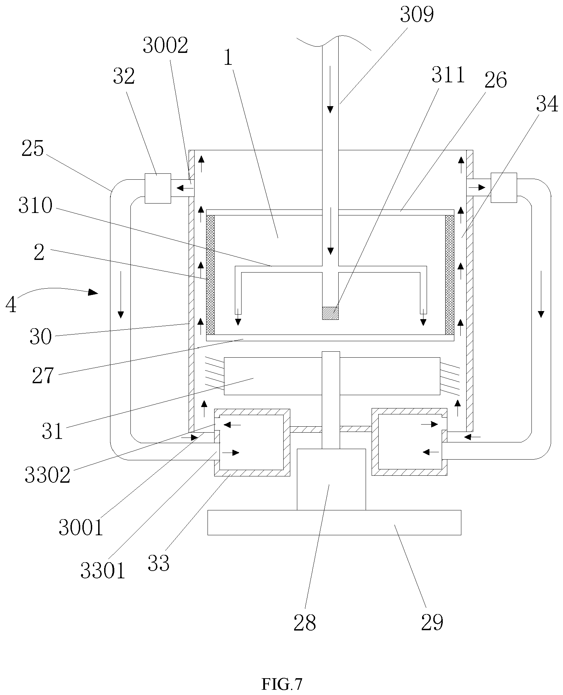

In another alternative embodiment of the present disclosure, as shown in FIGs. 6 and 7, the micro bubble generation device further includes a micro bubble generation tank 30 and a brushless motor 28. The brushless motor 28 is used for driving the liquid outside the microporous material layer 2 to rotate and flow along the circumferential direction of the gas accommodating chamber 1. The micro bubble generation tank 30 is a cylindrical structure which is vertically arranged and has an open top and a closed bottom. The brushless motor 28 is located below the gas accommodating chamber 1. An output shaft of the brushless motor 28 is arranged vertically upward, and an impeller 31 is provided on the output shaft of the brushless motor 28. A plurality of spiral blades that apply an upward thrust force to the liquid are provided on an outer wall of the impeller 31. The impeller 31 is close to the bottom of the gas accommodating chamber 1, and both the gas accommodating chamber 1 and the impeller 31 are disposed in the micro bubble generation tank 30. A cutting water passage 34 is formed between the microporous material layer 2 and an inner wall of the micro bubble generation tank 30. An annular first liquid inlet 3001 is provided at the bottom of the micro bubble generation tank 30 in the circumferential direction of the micro bubble generation tank 30. A plurality of first liquid outlets 3002 are provided at the top of the micro bubble generation tank 30. A liquid circulation tank 33 is provided at the bottom of the micro bubble generation tank 30, and the liquid circulation tank 33 is an annular structure arranged in the horizontal direction. The liquid circulation tank 33 is provided with a plurality of second liquid inlets 3301 and second liquid outlets 3302. The second liquid outlet 3302 is an annular opening extending along the circumferential direction of the liquid circulation tank 33. The second liquid outlet 3302 is in communication with the first liquid inlet 3001, and the first liquid inlet 3001 is also in communication with external liquid. Each of the first liquid outlets 3002 is in communication with the corresponding second liquid inlet 3301 respectively through a liquid circulation pipe 25. Each of the second liquid inlets 3302 extends in the tangential direction of the inner wall of the liquid circulation tank 33, so as to form a swirling water flow in the same direction as the rotation direction of the impeller 31 in the liquid circulation tank 33. In the working process, the impeller 31 rotates and creates a negative pressure in the micro bubble generation tank 30, the negative pressure suck the liquid into the micro bubble generation tank 30 through the annular first liquid inlet 3001, and the liquid flows upward in the micro bubble generation tank 30 while rotating and flowing in the circumferential direction of the microporous material layer 2 at the outside thereof to cut the micro bubbles on the outer surface of the microporous material layer 2. Thereafter, a part of the liquid flows directly out through the top opening of the micro bubble generation tank 30; and another part of liquid flows into the corresponding liquid circulation tanks 33 through the liquid circulation pipes 25 on the micro bubble generation tank 30, and then is recycled back into the micro bubble generation tank 30 for circulation through the second liquid outlets 3302 on the liquid circulation tanks 33 and the first liquid inlet 3001 of the micro bubble generation tank 30 being in communication with the second liquid outlets 3302. As the recycled backflow water has a certain kinetic energy, it can reduce the energy consumption of the impeller 31. The brushless motor 28 is an inner rotor brushless motor for underwater work.

Further, the impeller 31 is a cylindrical hollow cavity with a sealed top and a sealed bottom. The output shaft of the brushless motor 28 passes through the center of the impeller 31. The impeller 31 is fixed to the output shaft of the brushless motor 28 through a coupling, and the spiral blade is provided on the outer wall of the impeller 31. In the working process, the thrust of the impeller 31 that drives the liquid to flow upward is controlled to be less than the thrust of the impeller 31 that drives the liquid to rotate in the circumferential direction, it is therefore necessary to adjust the inclination angle of the spiral blade to be as small as possible, so as to make the water flow rotate as many turns as possible during its flow through the microporous material layer 2, thereby making full use of the liquid that consumes energy to move. In addition, the above purpose can also be achieved by increasing the height of the gas accommodating chamber 1, which can be adjusted according to actual situation in the working process.

Further, as shown in FIG. 6, the liquid circulation pipe 25 is provided with a flow regulating valve 32, by which the flow rate of the liquid passing through the liquid circulation pipe 25 can be regulated.

Further, the cross-sectional area of the cutting water passage 34 is slightly smaller than that of the first liquid inlet 3001, so as to ensure that the water flow outside the gas accommodating chamber 1 can be in close contact with the outer surface of the microporous material layer 2 to cut the micro bubbles. The cross-sectional area of the cutting water passage 34 should be slightly smaller than that of the first liquid inlet 3001, otherwise the gas outlet will be obstructed and the gas outlet pressure of the gas pump 5 has to be increased. The water flow on the side away from the outer surface of the microporous material layer 2 is substantially an ineffective water flow, which is unable to cut micro bubbles on the outer surface of the microporous material layer 2. Therefore, the smaller the cross-sectional area of the cutting water passage 34 is, the better the effect is, and the water flow flowing through the cutting water passage 34 can be brought into close contact with the outer surface of the microporous material layer 2, thereby improving the cutting efficiency of the micro bubbles on the microporous material layer 2.

Specifically, as shown in FIGs. 6 and 7, the gas transmission pipeline 3 includes a third main gas transmission pipe 309. One end of the third main gas transmission pipe 309 is located above the Liquid surface. The other end of the third main gas transmission pipe 309 extends into the gas accommodating chamber 1 and is internally sealed with a third plugging block 311. Four third branch gas transmission pipelines 310 are connected to the third main gas transmission pipe 309 located in the gas accommodating chamber 1, and the third branch gas transmission pipes 310 are uniformly distributed in the circumferential direction of the third main gas transmission pipe 309. The third branch gas transmission pipe 310 includes a horizontal pipe section and a vertical pipe section. One end of the horizontal pipe section is connected to the third main gas transmission pipe 309. The other end of the horizontal pipe section extends in the horizontal direction to a position close to the microporous material layer 2 and is connected to the top end of the vertical pipe section. The bottom end of the vertical pipe section extends vertically downward. The third main gas transmission pipe 309 and the third branch gas transmission pipes 310 deliver the gas from the gas source into the gas accommodating chamber 1, and distribute the gas substantially uniformly on the inner wall of the microporous material layer 2.

Further, as shown in FIGs. 6 and 7, the micro bubble generation device further includes a second upper cap 26 and a second lower cap 27. The microporous material layer 2 is a cylindrical structure which is vertically arranged and has two open ends. The second upper cap 26 is sealingly disposed at the top opening of the microporous material layer 2, and the second lower cap 27 is sealingly disposed at the bottom opening of the microporous material layer 2. The third branch gas transmission pipe 310 passes through the second upper cap 26 from top to bottom and extends into the gas accommodating chamber 1. The second upper cap 26 and the microporous material layer 2, and the second lower cap 27 and the microporous material layer 2 may be sealed and fixed by a connection manner such as a sealant. In the embodiment, the microporous material layer 2, the second upper cap 26 and the second lower cap 27 are combined to form a shearing head 4 located in the liquid and allowing the liquid to rotate and flow in its circumferential direction.

Further, as shown in FIG. 6, the micro bubble generation device further includes a third fixed base 29, which is located below the micro bubble generation tank 30. The brushless motor 28 is fixed on the top of the third fixed base 29. The stability of the brushless motor 28 is improved by the third fixed base 29, thereby preventing the brushless motor 28 from shaking under the action of an external force during operation.

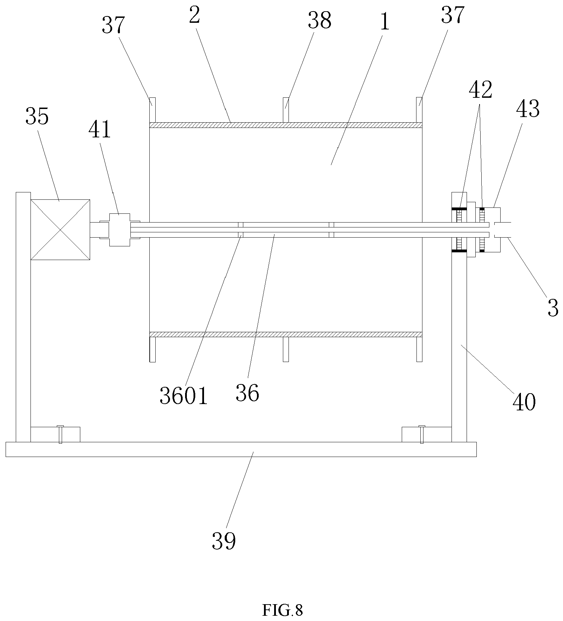

In an alternative embodiment of the present disclosure, as shown in FIG. 8, the gas accommodating chamber 1 is a cylindrical structure formed by enclosing of the microporous material layer 2 and sealed at both ends. An axial direction of the gas accommodating chamber 1 is arranged in a horizontal direction. A second hollow shaft 36 is arranged at an internal center axis of the gas accommodating chamber 1 in the axial direction thereof. The second hollow shaft 36 is provided with a plurality of gas inlet holes 3601 being in communication with the gas accommodating chamber 1. Each second hollow shaft 36 protrudes to the outside of the gas accommodating chamber 1 and is connected to a first driving motor 35 and the gas transmission pipeline 3, respectively. Since the gas accommodating chamber 1 is disposed in the horizontal direction, the length of the gas accommodating chamber 1 is not limited by the water depth, and the length of the gas accommodating chamber 1 can be arbitrarily adjusted even in a shallow water environment. Of course, if the length of the gas accommodating chamber 1 is too long, it may lead to poor structural stability, but this problem is not considered in the present application.

If the gas accommodating chamber 1 is disposed in the vertical direction, the water pressure difference between the upper and lower ends of the gas accommodating chamber 1 is large, which leads to inconsistency of the gas output amount and the bubble diameter at the upper and lower ends. In the embodiment, this problem is overcome by disposing the gas accommodating chamber 1 in the horizontal direction. When the gas accommodating chamber 1 is disposed in the horizontal direction, the pressure difference between the upper portion and the lower portion of the gas accommodating chamber 1 depends on the diameter of the gas accommodating chamber 1.

Further, as shown in FIG. 8, the diameter of the gas accommodating chamber 1 is much smaller than the axial length of the gas accommodating chamber 1. The diameter of the gas accommodating chamber 1 is about 10 cm, and the axial length of the gas accommodating chamber 1 is greater than 1 m.

In this embodiment, as shown in FIG. 8, an annular first baffle 37 is disposed on the outer wall of the gas accommodating chamber 1 at each end of the gas accommodating chamber 1 in the circumferential direction of the gas accommodating chamber 1. The outer diameter of the first baffle 37 is larger than the diameter of the gas accommodating chamber 1. When the gas accommodating chamber 1 rotates, the nearby water body is driven to rotate and fling outward, and a negative pressure area is formed at a position close to the microporous material layer 2. The formation of the negative pressure area causes the water body located on the left and right sides of the gas accommodating chamber 1 to supplement to the negative pressure area and squeeze the micro-nano bubbles that have just detached from the microporous material layer 2, causing some of the cut micro-nano bubbles to combine to form larger bubbles. In particular, the negative pressure at a position close to the outer wall of the microporous material lay 2 is the largest, and the cut micro-nano bubbles are pressed and combine to form larger bubbles. The water flows on the left and right sides will collide at a middle position outside the microporous material layer 2, and are more easily combined into large bubbles. By providing the two first baffles 37, the water flow can only squeeze the generated micro-nano bubbles at an area outside the two first baffles 37, where the concentration of the micro-nano bubbles is very low due to the fact that the micro-nano bubbles have diffused into a larger water body, so that the proportion of bubbles that are pressed and combine into large bubbles is also greatly reduced, thereby greatly reducing the influence of the collision of the water flow on the micro-nano bubbles. The larger the diameter of the first baffle 37, the better the first baffle 37 blocks the water flow. However, since the water body between the two first baffles 37 is driven to rotate with the gas accommodating chamber 1, the increase in the diameter of the first baffle 37 will lead to an increase in energy consumption. Therefore, it is desirable to balance the particle size of the generated bubbles and the energy consumption.

Further, as shown in FIG. 8, an annular second baffle 38 is disposed on the outer wall of the gas accommodating chamber 1 at a position between the two first baffles 37 in the circumferential direction of the gas accommodating chamber 1. The diameter of the second baffle 38 is larger than that of the first baffle 37. The second baffle 38 is located at the middle position of the outer wall of the gas accommodating chamber 1. Since the diameters of the two first baffles 37 cannot be increased for the sake of power consumption, the water flow is squeezed by the negative pressure formed outside the two first baffles 37 and collide at the middle position of the two first baffles 37, resulting in an increased proportion of generation of large bubbles. However, by providing the second baffle 38 between the two first baffles 37, the collision of the water flow can be effectively prevented, and the second baffle 38 will only increase the friction between itself and the water body and will not lead to a substantial increase in power consumption.

Specifically, as shown in FIG. 8, the micro bubble generation device further includes a fourth fixed base 39 and a first support 40. The bottom of the first support 40 is fixed to the fourth fixed base 39 by a screw and a nut that fit with each other. The first driving motor 35 is fixed on the top of the first support 40. The rotating shaft of the first driving motor 35 is disposed in the horizontal direction and is connected to one end of the second hollow shaft 36 through an aligning coupling 41. The other end of the second hollow shaft 36 is rotatably disposed on the first support 40 through a bearing structure. Annular second sealing rings 42 sleeve on the second hollow shaft 36 and are located on two sides of the bearing structure respectively. The interior of the second hollow shaft 36 is being in communication with the gas transmission pipeline 3 through a bearing seat and a sealing pipe 43 to ensure a good sealing effect.

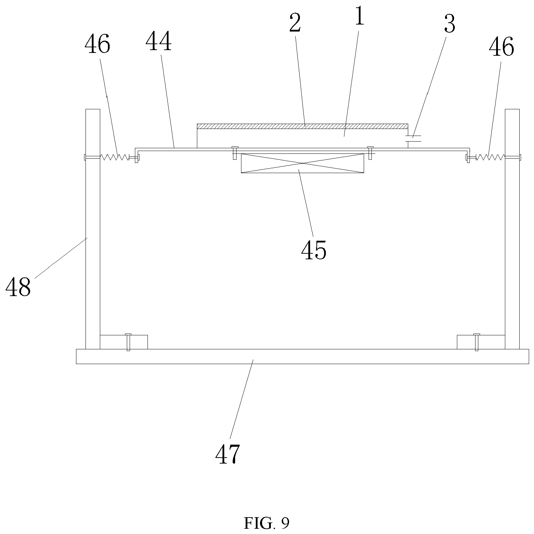

In an alternative embodiment of the present disclosure, as shown in FIG. 9, the micro bubble generation device includes a mounting plate 44 capable of vibrating in the horizontal direction. The microporous material layer 2 encloses at the top of the mounting plate 44 to form the gas accommodating chamber 1 (or the microporous material layer 2 may sleeve on the outer side of the mounting plate 44 to form the gas accommodating chamber 1). The gas accommodating chamber 1 is provided with a gas inlet connected with the gas transmission pipeline 3. A second driving motor 45 is disposed below the mounting plate 44 and fixed to a center position of the bottom of the mounting plate 44. A motor shaft of the second driving motor 45 is perpendicular to a surface of the mounting plate 44 that is horizontally disposed. The vibration force generated by the second driving motor 45 is distributed on a vertical plane perpendicular to the motor shaft. The second driving motor 45 is mounted perpendicular to the mounting plate 44 in the direction of the output shaft. The centrifugal force generated by an eccentric block on the output shaft of the second driving motor 45 drives the entire mounting plate 44 to generate a high-frequency reciprocating movement in the horizontal direction under the cooperation of a spring 46. During the high-frequency reciprocating movement of the mounting plate 44, gas permeates from the microporous material layer 2 and is cut to form micro-nano bubbles. Since the micro-nano bubbles gradually grow larger and combine with the surrounding bubbles due to the capillary adsorption force and/or the surface tension between the bubbles and the microporous material layer 2. Therefore, the the micro-nano bubbles should be cut before they become large bubbles by the water body during the high-frequency reciprocating movement of the mounting plate 44 in the horizontal direction, and then the micro-nano bubbles with initial upward movement potential energy enter into the water body in the form of micro-nano bubbles. If the mounting plate 44 is not vibrated in the horizontal direction in a stationary water body, bubbles emerging from the microporous material layer 2 are sparse and rise rapidly. If the mounting plate 44 is vibrated horizontally, the bubbles are dense and rise slowly as being cut into micro-nano bubbles. Therefore, in this embodiment, the effect is better in the flowing water body, where the formed micro-nano bubbles are washed away by the water flow and are diluted and diffused, the inertial tendency of the micro-nano bubbles to rise to the water surface is disrupted due to the continuous generation of micro-nano bubbles, and the micro-nano bubbles dispersed into the surrounding larger water body are dispersed in the water and rise slowly.

In this embodiment, as the second driving motor 45 drives the mounting plate 44 to start vibrating, it is clearly observed that the bubbles generated on the microporous material layer 2 begin to become smaller and denser. As the vibration frequency increases, the bubbles further become smaller and denser. When the vibration frequency rises to a certain value, the bubbles start to become larger and sparser due to collision and combination, and as the frequency further increases, the bubbles become larger and sparser. Therefore, micro-nano bubbles with different particle sizes can be obtained by adjusting the vibration frequency of the mounting plate 44. The particle sizes of the initial bubble generated on different microporous materials are different, and the particle sizes of the initial bubbles generated on microporous materials of the same species and the same batch is also slightly different. It is desirable to ensure that the particle sizes of the generated bubbles are within a desired suitable range by adjusting the vibration frequency of the second driving motor 45.

Further, the second driving motor 45 may be, but is not limited to, a vibration motor. In the present disclosure, the mounting plate 44 is driven to vibrate in the horizontal direction by the centrifugal force generated by the high-speed rotation of the eccentric block in the vibration motor in conjunction with the horizontally disposed spring 46, which is different from the conventional use method of the vibration motor, as the conventional use method is to place the spring vertically to generate up and down vibration to achieve the effect of vibration and screening of products. This is an innovative use of the vibration motor required in connection with the present present disclosure.

Specifically, as shown in FIG. 9, the micro bubble generation device further includes a fifth fixed base 47 and a second support 48. The bottom of the second support 40 is fixed to the fifth fixed base 39 by a screw and a nut that fit with each other. The mounting plate 44 is a flat plate-shaped structure of square or circular shape disposed in the horizontal direction. A steel sheet is welded to an intermediate position of each edge of the mounting plate 44, respectively, and the steel sheet extends downward of the mounting plate 44 in the vertical direction. Each edge of the mounting plate 44 is provided with a spring 46, and the spring 46 is connected to the mounting plate 44 by a screw and a nut that fit with each other. The other end of the spring 46 is connected to the second support 48. The spring 46 is provided horizontally below the Liquid surface. Of course, the mounting plate 44 may also be of polygonal shape.

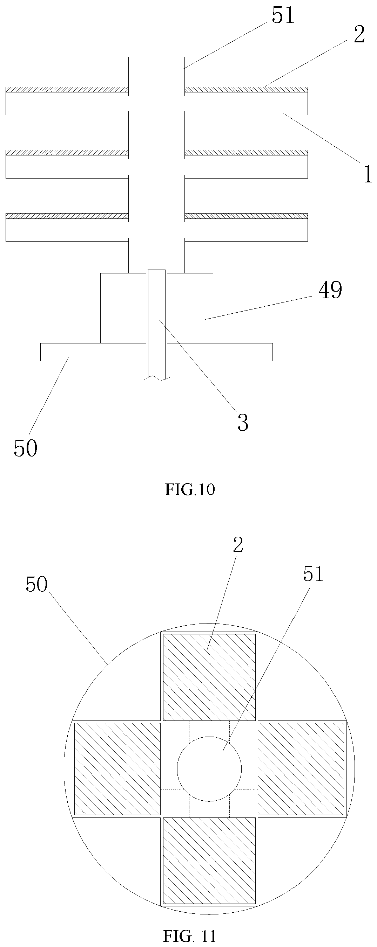

In an alternative embodiment of the present disclosure, as shown in FIG. 10, the micro bubble generation device includes a hollow column 51 disposed in the vertical direction. The hollow column 51 has a sealed top and a bottom that is connected to the gas transmission pipeline 3. The gas transmission pipeline 3 extends into the interior of the hollow column 51. A third driving motor 49 capable of driving the hollow column 51 to rotate is arranged at the bottom of the hollow column 51. A plurality of gas accommodating chambers 1 being in communication with the interior of the hollow column 51 are connected to the hollow column 51, and each gas accommodating chamber 1 is provided with the microporous material layer 2. The microporous material layer 2 may be a flat plate- shaped structure disposed in the horizontal direction, and the microporous material layer 2 is covered on the top of the gas accommodating chamber 1. Alternatively, the microporous material layer 2 may be of cylindrical shape so as to be disposed around the periphery of the gas accommodating chamber 1. During use, the third driving motor 49 drives the hollow column 51 to rotate, each gas accommodating chamber 1 and each microporous material layer 2 rotates synchronously with the hollow column 51, the gas in each gas accommodating chamber 1 emerges from the microporous material layer 2 and is cut by the water body, and the gas enters the water body driven by its initial upward power to form micro-nano bubbles.

Further, as shown in FIGs. 10 and 11, a plurality of gas accommodating chambers 1 are vertically arranged at intervals to be in a multilayer configuration. The gas accommodating chambers 1 in each layer are spaced and uniformly distributed in the circumferential direction of the hollow column 51.

Further, the cross section of the gas accommodating chamber 1 (i.e., the cross section of the microporous material layer 2) may be, but is not limited to, rectangular distributed at intervals. If the gas accommodating chamber 1 is in the shape of a complete annular that is annularly provided outside the hollow column 51 in the circumferential direction of the hollow column 51, the gas accommodating chamber 1 has the following disadvantages: in the process of rotation of the complete annular gas accommodating chamber 1, the micro-nano bubbles generated in the inner ring of the microporous material layer 2 are easily thrown out (i.e., the micro-nano bubbles generated in the inner ring of the microporous material layer 2 are driven to move to the outer ring of the microporous material layer 2) by centrifugal force, and collide and combine with the micro-nano bubbles generated in the outer ring of the microporous material layer 2, and a large proportion of large bubbles will be formed if this process continues. Therefore, in an alternative embodiment of the present disclosure, two adjacent microporous material layers 2 of the same layer may be spaced apart to shorten the duration of the collision and combination process, so that micro-nano bubbles are widely spread into the water body before they form large bubbles with diameters larger than 100 um, thereby greatly reducing the chance of collision.

Specifically, as shown in FIGs. 10 and 11, the micro bubble generation device further includes a sixth fixed base 50 which is a disc-shaped structure disposed in a horizontal direction. The third driving motor 49 is an inner rotor motor and is fixedly disposed on the top of the sixth fixed base 50. A bottom end of the hollow column 51 is connected to the inner rotor of the third driving motor 49. The gas transmission pipeline 3 passes through the sixth fixed base 50 and a central hole of the inner rotor of the third driving motor 49 in turn from bottom to top and extends into the interior of the hollow column 51. The height of the gas transmission pipeline 3 protruding into the hollow column 51 is lower than the height of each gas accommodating chamber 1, such that the gas delivered into the hollow column 51 through the gas transmission pipeline can smoothly enter into each gas accommodating chamber 1, and the gas itself has upward kinetic energy.

The particle size of the micro bubbles generated by the present disclosure can be adjusted according to actual needs. In the present disclosure, there are four factors that determine the particle size of the micro bubbles. The first factor is the pore diameter and gas permeability of the microporous material layer 2. The microporous material layers 2 with different material parameters have different pore diameters and different gas permeability. Pore size and gas permeability of the microporous material layers 2 with the same material parameter may also change according to the actual use environment. The second factor is the rotational speed at which the micro bubbles are cut. The higher the rotation speed is, the smaller the particle size of the cut micro bubbles is, which however is also affected by the gas permeability of the material. If the microporous material layer 2 has a large pore diameter, thin wall and good gas permeability, as the rotation speed increases, the centrifugal force of the gas rotation also increases, and the amount of the gas output increases, which in turn leads to larger particle size of the micro bubbles. The third factor is the gas pressure in the gas accommodating chamber 1, which can be regulated by the gas pump 5. The larger the gas pressure is, the larger the gas output is, and the larger the particle size of the micro bubbles is, and vice versa. The fourth factor is the adjusting knob 9 on the flow meter 8, which adjusts the gas output by changing the gas resistance of the system, thereby adjusting the particle size of the micro bubbles.

The energy consumption of the present disclosure is described below with specific data.

The first device option: the power of the motor (the outer rotor motor 13 or the inner rotor motor 15) is 600 W; the pore diameter of the microporous material layer 2 is 1 µm, the outer diameter of the microporous material layer 2 is 80 mm, and the vertical height of the microporous material layer 2 is 66 mm, 134 mm, and 200 mm, respectively; the filtration accuracy of the primary filter 6 (i.e., the pore diameter of the filter element) is 10 µm; the filtration accuracy of the secondary filter 7 is 0.1 µm; the gas pump 5 is a miniature gas pump, the rated power of the gas pump 5 is 12 W, the rated gas flow of the gas pump 5 is 15 L, and the power consumption per liter is 15/12=0.8 W. In actual use, when the rotation speed of the brushless motor 28 is 770 revolutions per minute, the intensity of pressure in the gas accommodating chamber 1 is 0.5 atmosphere, and the micro bubbles dispersed in the water are clearly visible.

**Table 1**

| Height of the gas accommodating chamber (mm) | Motor voltage (V) | Motor current (A) | Motor power (W) | Gas flow rate (L/M) | Energy consumption per litre (W) | Energy consumption per liter of gas pump (W) | Total energy consumption per liter of flow (W) |
|---|---|---|---|---|---|---|---|
| 66 | 30 | 0.25 | 7.5 | 1.2 | 6.25 | 0.8 | 7.05 |
| 134 | 30 | 0.33 | 10 | 2.4 | 4.17 | 0.8 | 4.97 |
| 200 | 30 | 0.40 | 12 | 3.7 | 3.24 | 0.8 | 4.04 |

Extrapolations can be made from based on the data in Table 1:
After commercialization, the outer diameter of the microporous material layer 2 is increased to 240 mm and the height thereof is increased to 1000 mm, and the energy consumption per liter in this case is calculated. When the height of the microporous material layer 2 is 200 mm, the energy consumption is 12 W, and when the height is 66 mm, the energy consumption is 7.5W so that the energy consumption is increased by 4.5 W when the surface area of the microporous material layer 2 is doubled It can be calculated that the basic energy consumption is 5.25 W, and the energy consumption due to the frictional resistance during rotation of the microporous material layer 2 with a height of 66 mm is 2.25 W. When the outer diameter of the microporous material layer 2 is increased to 240 mm and the height thereof is increased to 1000 mm, that is, when the surface area of the microporous material layer 2 is increased by 45 times, the frictional resistance energy consumption is 2.25×45=101.3 W, which plus the basic energy consumption of 5.25 W to obtain the total energy consumption of 106.5 W. If the gas flow rate is assumed to increase by the same multiple to 1.2×45=54, the energy consumption per liter of gas is 106.5/54=1.97, which plus the energy consumption of the gas pump of 0.8 W to obtain the total energy consumption required for delivering the gas flow per liter of 2.77 W.

The second device option: the power of the motor (brushless motor 28) is 1500 W; the pore diameter of the microporous material layer 2 is 1 µm, the outer diameter of the microporous material layer 2 is 80 mm, and the height of the microporous material layer 2 in the vertical direction is selected to be 200 mm; the impeller 31 has a height of 30 mm and a diameter of 70 mm, and the number of helical blades is four, and the width of the helical blade is 5 mm, and the inclination of the helical blade (i.e., the included angle in the horizontal direction of the helical blade) is 10 degrees, the width of the first liquid inlet 3001 is 2 mm, and the width of the cutting water passage 34 is 1.5 mm. When the rotation speed of the motor is 1000 revolutions per minute, the voltage of the motor is 30 V, the current of the motor is 10 A, the gas pressure in the gas accommodating chamber 1 is 0.5 atm, and the gas flow rate is 3.9 L/M, the energy consumption required by the motor for delivering each liter of gas is 30×10/3.9=76.9 W, the energy consumption required by the gas pump 5 for delivering each liter of gas 5 is 0.8 W, and the total energy consumption required for delivering each liter of gas flow is 77.7 W.

With the rotary cutting method of the prior art, the energy consumption for inputting each liter of gas flow is 275 W (current manufacturer's published data). When the first device is used (i.e., the microporous material layer 2 is driven to rotate), the total energy consumption of the device is reduced by 68.07 times (275/4.04=68.07), and after commercialization, the total energy consumption of the device is calculated to be reduced by 99.28 times (275/2.77=99.28). When the second device is selected (i.e. the liquid outside the microporous material layer 2 is driven to flow in the circumferential direction of the microporous material layer 2), the total energy consumption of the device is reduced by 3.54 times (275/77.7=3.54).

Described above is merely exemplary embodiments of the present disclosure, and is not intended to limit the scope of the present disclosure. Any equivalent changes and modifications made by those skilled in the art without departing from the concepts and principles of the present disclosure shall fall within the scope of the present disclosure.

## Claims

1. A micro bubble generation method, comprising:
passing a gas through a microporous material, the gas forming micro bubbles at an interface between the microporous material and liquid; and
impacting the micro bubbles adsorbed on the microporous material by relative motion of the microporous material and the liquid, such that the micro bubbles detach from the microporous material and enter into the liquid.

2. The micro bubble generation method according to claim 1, wherein a shear force of the liquid on the micro bubbles is greater than an adsorption force or a surface tension of capillary effect of the microporous material on the micro bubbles.

3. The micro bubble generation method according to claim 1 or 2, wherein the liquid is in a static state; and
the microporous material is in a moving state and drives the gas entering the microporous material to move synchronously with it, so as to impact the micro bubbles formed on the interface between the microporous material and the liquid.

4. The micro bubble generation method according to claim 1 or 2, wherein the microporous material is in a static state; and
the liquid is in a moving state, so as to impact the micro bubbles formed on the interface between the microporous material and the liquid.

5. The micro bubble generation method according to claim 1 or 2, wherein the microporous material is a cathode or an anode that generates micro bubbles on the surface of the material during electrolysis.

6. A micro bubble generation device, comprising a gas accommodating chamber disposed below a Liquid surface and a gas transmission pipeline for delivering gas into the gas accommodating chamber, wherein a microporous material layer that allows the gas in the gas accommodating chamber to pass through is provided around a periphery of the gas accommodating chamber;
one end of the gas transmission pipeline is located above the Liquid surface and is connected to a gas source, and the other end of the gas transmission pipeline extends into the gas accommodating chamber, so that the gas in the gas accommodating chamber passes through the microporous material layer by gas pressure and forms micro bubbles on an outer surface of the microporous material layer; and
the microporous material layer and/or the liquid outside the microporous material layer cut the micro bubbles by movement, such that the micro bubbles enter into the liquid.

7. The micro bubble generation device according to claim 6, wherein the gas transmission pipeline is provided with a gas pump, a primary filter and a secondary filter in sequence in a flow direction of the gas; and
a pore diameter of a filter element of the secondary filter is smaller than a pore diameter of a filter element of the primary filter and a pore diameter of the microporous material layer.

8. The micro bubble generation device according to claim 6 or 7, wherein the gas transmission pipeline is provided with a flow meter and a pressure gauge, and the flow meter is provided with an adjusting knob capable of controlling a flow rate of the gas.

9. The micro bubble generation device according to claim 8, wherein the device further comprises an outer rotor motor for driving the gas accommodating chamber to rotate in a circumferential direction, the outer rotor motor is disposed in the gas accommodating chamber, and an outer rotor of the outer rotor motor is sealingly and fixedly connected with an inner wall of a lower portion of the microporous material layer.

10. The micro bubble generation device according to claim 9, wherein the device further comprises a first fixed base;
the microporous material layer is a cylindrical structure which is vertically arranged and has a closed top and an open bottom;
a sealing cap made of a microporous material and integrally formed with the microporous material layer is provided on the top of the microporous material layer, and the sealing cap is a hollow hemispherical structure protruding upward; and
the bottom of the outer rotor motor is sealingly and fixedly connected to the top of the first fixed base.

11. The micro bubble generation device according to claim 10, wherein the gas transmission pipeline comprises a first main gas transmission pipe, one end of which is located above the Liquid surface, and the other end of which extends into the gas accommodating chamber through the first fixed base and the outer rotor motor in sequence and is internally sealed with a first plugging block;
the first main gas transmission pipe passes through a central hole of the outer rotor motor and is sealingly and fixedly connected with the outer rotor motor;
a plurality of first branch gas transmission pipes are connected to the first main gas transmission pipe located in the gas accommodating chamber, and are uniformly distributed in a circumferential direction of the first main gas transmission pipe; and
the first branch gas transmission pipe comprises a horizontal pipe section and a vertical pipe section, one end of the horizontal pipe section is connected to the first main gas transmission pipe, the other end of the horizontal pipe section extends in a horizontal direction to a position close to the microporous material layer and is connected to a top end of the vertical pipe section, and the bottom end of the vertical pipe section extends vertically downward.

12. The micro bubble generation device according to claim 6, wherein the gas accommodating chamber is a cylindrical structure formed by enclosing of the microporous material layer and sealed at both ends, an axial direction of the gas accommodating chamber is arranged in a horizontal direction, and a second hollow shaft is arranged at an internal center axis of the gas accommodating chamber and arranged in the axial direction thereof; and
the second hollow shaft is provided with a plurality of gas inlet holes being in communication with the gas accommodating chamber, and the second hollow shaft protrudes to the outside of the gas accommodating chamber and is connected to a first driving motor and the gas transmission pipeline, respectively.

13. The micro bubble generation device according to claim 12, wherein an annular first baffle is provided on an outer wall of each end of the gas accommodating chamber and extends in a circumferential direction of the gas containing chamber.

14. The micro bubble generation device according to claim 13, wherein an annular second baffle is disposed on the outer wall of the gas accommodating chamber at a position between the two first baffles and extends in the circumferential direction of the gas accommodating chamber; and
the diameter of the second baffle is larger than that of the first baffle.

15. The micro bubble generation device according to claim 13, wherein the device further comprises a fourth fixed base and a first support, the bottom of the first support is fixed to the fourth fixed base, and the first driving motor is disposed on the first support;
a rotating shaft of the first driving motor is disposed in the horizontal direction and is connected to one end of the second hollow shaft through an aligning coupling, and the other end of the second hollow shaft is rotatably disposed on the first support through a bearing structure; and
an interior of the second hollow shaft is being in communication with the gas transmission pipe through a bearing seat and a sealing pipe.

16. The micro bubble generation device according to claim 6, wherein the device comprises a mounting plate capable of vibrating in the horizontal direction, the microporous material layer encloses at the top of the mounting plate to form the gas accommodating chamber, and the gas accommodating chamber is provided with a gas inlet connected with the gas transmission pipeline; and
a second driving motor is disposed below the mounting plate and is fixed to a center position of the bottom of the mounting plate, and a motor shaft of the second driving motor is perpendicular to a surface of the mounting plate that is horizontally disposed.

17. The micro bubble generation device according to claim 16, wherein the second driving motor is a vibration motor.

18. The micro bubble generation device according to claim 16, wherein the device further comprises a fifth fixed base and a second support, and the bottom of the second support is fixed on the fifth fixed base; and
the mounting plate is a flat plate-shaped structure disposed in the horizontal direction, a middle position of each edge of the mounting plate is respectively connected with the second support through a spring, and the spring is in a horizontal state below the Liquid surface.

19. The micro bubble generation device according to claim 17, wherein the mounting plate is of square or circular shape.
